Europäisches Patentamt

European Patent Office

Office européen des brevets

(11) Publication number: **0 308 708**
**A2**

(12) **EUROPEAN PATENT APPLICATION**

(21) Application number: 88114387.9

(22) Date of filing: 02.09.88

(51) Int. Cl.⁴: **C04B 35/64**

(30) Priority: 23.09.87 US 99824

(43) Date of publication of application:
29.03.89 Bulletin 89/13

(84) Designated Contracting States:
**DE FR GB IT SE**

(71) Applicant: **WESTINGHOUSE ELECTRIC CORPORATION**
**Westinghouse Building Gateway Center**
**Pittsburgh Pennsylvania 15235(US)**

(72) Inventor: **Bajaj, Ram**
**886 Feightner Road**
**Greensburg, PA 15601(US)**

(74) Representative: **Fleuchaus, Leo, Dipl.-Ing. et al**
**Melchiorstrasse 42**
**D-8000 München 71(DE)**

(54) Method to improve the fracture toughness and strength of ceramic materials.

(57) Ceramic articles having improved fracture toughness properties are prepared by a powder metallurgical process wherein ceramic particles having an average particle size of between about 0.5 and about 60 micrometers in diameter, are injected with a beam of accelerated metallic ions to produce a supply of metallic ion-containing ceramic particles. The metallic ion-containing ceramic particles are cold compacted into a form by applying pressure thereabout. The form is then heated at a temperature of at least about 800°c in an atmosphere comprising a gas such as oxygen, nitrogen, and mixtures thereof, whereby the gas reacts with such injected metal ions to produce a metal-gas reaction product which is dispersed throughout the form.

```
      1 ┌─ CERAMIC PARTICLES
        │  ( 0.05 - 60 μ m )
             │
      2 ┌─ INJECT METALLIC ION
        │  INTO
        │  CERAMIC PARTICLES
             │
      3 ┌─ COLD COMPACT
        │  METALLIC ION - CONTAINING CERAMIC
        │  PARTICLES INTO A FORM
             │
      4 ┌─ HEAT FORM IN GASEOUS
        │  ATMOSPHERE CONTAINING A GAS
        │  REACTIVE WITH THE INJECTED METAL
        │  TO PRODUCE REACTION PRODUCT IN ARTICLE
             │
      5 ┌─ CERAMIC ARTICLE
        │  CONTAINING REACTION PRODUCT
        │  DISPERSED THROUGHOUT
```

Xerox Copy Centre

## METHOD TO IMPROVE THE FRACTURE TOUGHNESS AND STRENGTH OF CERAMIC MATERIALS

This invention relates to a method for improving the fracture toughness and strength of ceramic materials, and more particularly, to such a method for formation of strengthened ceramic articles prepared by powder metallurgical processes.

As described in U.S. Patent 4,707,312, it is desirable to increase the fracture toughness, i.e., reduce brittleness, of many ceramics, so as to take advantage of the high strength at elevated temperatures, erosion resistance and corrosion resistance of ceramic materials. Such ceramic materials include, among others, silicon nitride, silicon carbide, partially stabilized alumina and partially stabilized zirconia.

This patent presented a method for producing ceramic articles, having improved fracture toughness properties, by a powder metallurgical technique with injection of fine ceramic particles with gas ions and compacting the same, with the compacted particles heated such that the gas ions form bubbles homogeneously dispersed throughout the ceramic article formed.

The fracture toughness and the strength of ceramic materials can be significantly improved by the mechanisms of transformation toughening, intergranular dispersion strengthening, or intragranular dispersion strengthening. In transformation toughening, the secondary phase particles, while constrained by the ceramic matrix, expand during phase transformation, resulting in residual stresses around each secondary phase particle, which have to be nullified for the crack to propagate through the transformed zone, i.e., increased fracture toughness. An example of transformation toughening is alumina toughened by tetragonal or monoclinic zirconia particles. In intergranular precipitation hardening, strengthening results from blockage of dislocations and growing cracks, especially at high temperatures, for example, in alumina-rich spinel with tetragonal zirconia particles. The mechanism of intragranular dispersion strengthening is effective in improving high temperature mechanical properties of softer ceramics by incorporation of hard, high modulus secondary phase particles as in tetragonal zirconia containing a dispersion of alumina particles.

Cochran et al., "Ion Implanted Precipitate Microstructure and Mechanical Properties of Ceramic Surfaces", The ASM Conference on The Application of Ion Plating and Implantation to Materials, Atlanta, GA, June, 1985, discusses the implantation of alumina surfaces with high doses of a 190 kiloelectron volt beam of zirconium ions and air annealing the resulting ceramic to produce precipitates of tetragonal and monoclinic zirconia in the alumina. The microstructure of the precipitate and, thus, the surface mechanical properties of the resulting ceramic, could be varied by altering the annealing schedule. In one example, the surface of a yttria stabilized zirconia wafer was implanted at 190 kiloelectron volts with $4 \times 10^{17}$ aluminum ions per square centimeter. In a second example, alumina discs were implanted at 180 kiloelectron volts with $1.5 \times 10^{17}$ zirconium ions per square centimeter.

Claussen, "Strengthening Strategies for $ZrO_2$-toughened Ceramics at High Temperatures", Materials Science and Engineering, 71, 1985, pp. 23-38, describes methods for developing microstructures in ceramic materials in order to improve the strength of the ceramics at high temperatures. Three methods which are determined to show particular promise are 1) the prevention of glassy intergranular films, 2) dispersing second phase of a hard material having a high Young's modulus, such as alumina, zirconia and spinel, throughout the ceramic, and 3) reinforcing the ceramic by the addition of fibers of materials such as silicon carbide and alumina.

It is an object of the present invention to provide a method for providing improvements in the properties of ceramic materials, specifically the improvement of the fracture toughness and strength properties thereof.

Ceramic articles having improved fracture toughness properties are prepared by a powder metallurgical process wherein ceramic particles having an average particle size of between about 0.5 and about 60 micrometers in diameter, are injected with a beam of accelerated metallic ions to produce a supply of metallic ion-containing ceramic particles. The metallic ion-containing ceramic particles are compacted at ambient temperature into a form by applying pressure thereabout. The form is then heated at a temperature of at least about 800°c, in an atmosphere comprising a gas such as oxygen, nitrogen, and mixtures thereof, whereby the gas reactors with such injected metal to produce a metal-gas reaction product which is dispersed throughout the form.

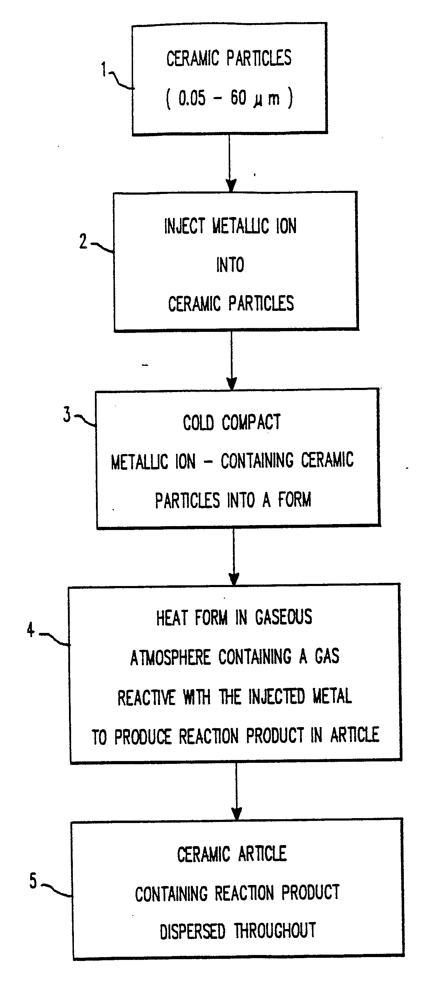

The drawing is a flow chart schematically illustrating the method of the present invention.

Ceramic articles having improved fracture toughness are produced by the present method wherein ceramic particles are injected with metallic ions, the injected particles are compacted, and the compact particles are heated in an atmosphere containing a gas such as air, oxygen, nitrogen or mixtures thereof, such that the gas reacts with the metallic ions to form a metallic ion-gas reaction product which is preferably substantially uniformly dispersed throughout the resulting ceramic article.

The present method forms ceramic articles of improved fracture toughness from ceramic compositions such as oxides, nitrides, borides and carbides of silicon, zirconium, aluminum, magnesium, yttrium, and other complex ceramic compounds such as SiALON. Examples of such ceramic compositions are zirconium oxide, silicon nitride, silicon carbide, partially stabilized zirconia (PSZ), tetragonal zirconia polycrystals (TZP), alumina, SiALON, mullite, spinel, cordierite, and the like.

The ceramic compositions are provided in a finely divided powdered state with particles having an average particle size of between about 0.5 to about 60 micrometers (um) in diameter. The small solid particles are of a size which enables injection thereof with metallic ions at reasonable energies.

The ceramic particles are injected with metallic ions to produce metallic ion-containing ceramic particles. The metallic ions used may vary depending upon the ceramic particle components, although metallic ions, such as zirconium, hafnium, silicon, and/or aluminum, are preferred.

The injection of the ceramic particles with metallic ions is effected by impingement of the ceramic particles with a high energy beam of accelerated metallic ions, preferably under vacuum, at ambient temperature, and preferably, with tumbling of the particles. Typically, an ion impingement of the ceramic powder will be effected with a few hundred kiloelectron volts (KeV) accelerated beam of metallic ions. Preferably, a 150 KeV beam of ions is used although the energy of the beam may be varied depending upon the particle size of the ceramic material and the accelerated metallic specie used. The particles are continuously tumbled during impingement to uniformly expose all of the powder particulates to the ion beam using known accelerators and vacuum tumbling systems, such as a rotating cup, for example, as described by L. R. Fleischer, J. A. Spitznagel and W. J. Choyke, "Helium Embrittlement of CRT Materials Simulated by Ion Implantation and Hot Iso static Pressing of Metal Powders", CONF-750989, Vol. II, 1976, pp. 372-386.

The injection of the ceramic particles with metallic ions is effected at ambient temperatures and the impingement carried out for a period of time sufficient to provide the quantity of metal-gas reaction product in the resulting ceramic article. In general, the ceramic particles will be injected with from about $5 \times 10^{14}$ and about $1 \times 10^{18}$ metallic ions per square centimeter.

The metallic ion-containing particles are then compacted into the ceramic article by first cold compacting the ceramic article to stabilize the same and then hot compacting or sintering the ceramic article. In the cold compacting step, the metallic ion-containing particles are compacted at ambient temperature by the application of pressure equally about the supply of metallic ion-containing particles. Cold isostatic pressing of the metallic ion-containing particles forms a monolithic shape or form which can be subsequently hot compacted. The cold compacting is effected at pressures sufficient to compress the particles to a density of from about 65 percent to about 85 percent of the theoretical density of the ceramic article to provide a form for subsequent hot pressing.

Hot compacting of the metallic ion-containing ceramic particles is then carried out with or without pressure to achieve substantially maximum density of the particles. Hot isostatic pressing at superatmospheric pressure, or sintering at atmospheric pressure, is effected at an elevated temperature, a temperature in excess of about 800°C, and preferably above 1000°C. The hot compacting of the metallic ion-containing ceramic article is performed in an atmosphere comprising a gas selected from the group consisting essentially of oxygen, nitrogen, and mixtures thereof. Air may be used as the gaseous atmosphere. The heating and compacting of the form of metallic ion-containing particles causes the gas to react with the injected metal to form a metal-gas reaction product distributed throughout the ceramic article. The article may then be annealed, if desired, to provide a preferred microstructure in the metal-containing ceramic article. In general, it will be desired that the metal-gas reaction product be substantially uniformly distributed throughout the ceramic article. However, if desired, the present method can be used to form ceramic articles wherein the metal-gas reaction product is not uniformly distributed throughout the ceramic article.

It will be understood that the desired microstructure, including grain size, particle morphology, volume fraction and size distribution, of the resulting ceramic article can be obtained by adjusting the ion energy, ion current, powder size and heat treatments during or following the consolidation stage.

Examples of the application of the present method include zirconia toughened alumina ceramics, tetragonal zirconia precipitation hardened alumina-rich spinel ceramics, and ceramics of tetragonal zirconia polycrystals dispersion strengthened with alumina. By the present method, the injection of zirconium metal ions in alumina and heat treatment can be used to produce tetragonal $ZrO_2$ and/or monoclinic $ZrO_2$ in the alumina improving the fracture toughness by transformation toughening and microcrack toughening. Or, elevated temperature strengthening of $Al_2O_3 \bullet MgO$ by dispersion of tetragonal $ZrO_2$ particles can be effected by precipitation strengthening. Or, dispersion strengthening of $Y_2O_3$ - TZP can be effected by $Al_2O_3$ particle dispersion improving high temperature mechanical properties. Also, an increase in transformation temperature from 1150 to 1460°c can be effected by dispersing $HfO_2$ alloyed $ZrO_2$ particles in $Al_2O_3$. To achieve this, $Hf^+$ and $Zr^+$ ions are injected in $Al_2O_3$ particles prior to consolidation.

The method is schematically illustrated in the drawing which illustrates a supply of ceramic particles (step 1) of a diameter of about 0.5 to about 60 micrometers, into which metallic ions are injected (step 2). The supply of metallic ion-containing ceramic particles are cold compacted (step 3) into a form that stabilizes the particles, and the form is then heated with or without pressure (step 4) to produce a ceramic article containing a metal-gas reaction product. The finished article (step 5) comprises a ceramic article containing the metal-gas reaction product dispersed throughout the article which induces increased fracture toughness.

The present method, by providing ceramic articles having a metal-gas reaction product distributed throughout the article, improves the fracture toughness of the article.

| IDENTIFICATION OF REFERENCE NUMERALS USED IN THE DRAWINGS | | |
| --- | --- | --- |
| LEGEND | REF. NO. | FIGURE |
| CERAMIC PARTICLES (0.05 - 60 $\mu$m) | 1 | 1 |
| INJECT METALLIC ION INTO CERAMIC PARTICLES | 2 | 1 |
| COLD COMPACT METALLIC ION - CONTAINING CERAMIC PARTICLES INTO A FORM | 3 | 1 |
| HEAT FORM IN GASEOUS ATMOSPHERE CONTAINING A GAS REACTIVE WITH THE INJECTED METAL TO PRODUCE REACTION PRODUCT IN ARTICLE | 4 | 1 |
| CERAMIC ARTICLE CONTAINING REACTION PRODUCT DISPERSED THROUGHOUT | 5 | 1 |

## Claims

1. A method of producing ceramic articles having improved fracture toughness properties by a powder metallurgical process characterized by the steps of:
providing a supply of ceramic particles having an average particle size of between about 0.5 and about 60 micrometers in diameter;
injecting metallic ions into the ceramic particles of said supply of particles by impingement therewith of a beam of accelerated said metallic ions to produce a supply of metallic ion-containing ceramic particles;
cold compacting said metallic ion-containing ceramic particles into a form by applying pressure thereabout; and
heating said form at a temperature of at least about 800°c in a gaseous atmosphere, whereby said gas reacts with said injected metal to produce a metal-gas reaction product which is dispersed throughout said form.

2. The method of claim 1 characterized in that said gaseous atmosphere comprises a gas selected from the group consisting essentially of oxygen, nitrogen, and mixtures thereof.

3. The method of claim 2 characterized in that said ceramic particles are selected from the group consisting of oxides, nitrides, borides and carbides of silicon, zirconium, aluminum, magnesium, yttrium and SiALON, and mixtures thereof.

4. The method of claim 2 characterized in that said metallic ions are selected from the group consisting of zirconium, hafnium, aluminum, silicon and mixtures thereof.

5. The method of claim 2 characterized in that said gaseous atmosphere comprises air.

6. The method of claim 1 characterized in that said ceramic particles are tumbled in a vacuum at ambient temperature during said impingement.

7. The method of claim 1 characterized in that said metallic ions are injected at an energy of about 150 kiloelectron volts.

8. The method of claim 1 characterized in that said metallic ions are injected into said ceramic particles so as to provide from about $5 \times 10^{14}$ and about $1 \times 10^{18}$ of said metallic ions per square centimeter.

9. The method of claim 1 characterized in that said heating of said form is effected under superatmospheric pressure.

4

10. The method of claim 1 characterized in that said compacting of said metallic ion-containing ceramic particles into a form is effected to provide a form having a density of about 65 to about 85 percent of the theoretical density of said form.

11. The method of claim 1 characterized in that said metal-gas reaction product is dispersed substantially uniformly throughout said form.

```
         ┌─────────────────────────────┐
    1 ─── │      CERAMIC PARTICLES      │
         │      ( 0.05 − 60 μm )       │
         └─────────────────────────────┘
                       │
                       ▼
         ┌─────────────────────────────┐
    2 ─── │     INJECT METALLIC ION     │
         │             INTO            │
         │      CERAMIC PARTICLES      │
         └─────────────────────────────┘
                       │
                       ▼
         ┌───────────────────────────────────┐
    3 ─── │            COLD COMPACT           │
         │  METALLIC ION − CONTAINING CERAMIC │
         │       PARTICLES INTO A FORM        │
         └───────────────────────────────────┘
                       │
                       ▼
         ┌───────────────────────────────────────┐
    4 ─── │         HEAT FORM IN GASEOUS          │
         │    ATMOSPHERE CONTAINING A GAS        │
         │  REACTIVE WITH THE INJECTED METAL     │
         │ TO PRODUCE REACTION PRODUCT IN ARTICLE│
         └───────────────────────────────────────┘
                       │
                       ▼
         ┌───────────────────────────────────┐
    5 ─── │          CERAMIC ARTICLE          │
         │   CONTAINING REACTION PRODUCT      │
         │       DISPERSED THROUGHOUT         │
         └───────────────────────────────────┘
```